# EUROPEAN PATENT SPECIFICATION

(11) **EP 0 799 372 B1**
(45) Date of publication and mention of the grant of the patent: **01.09.1999**
(21) Application number: 95943667.6
(22) Date of filing: 05.12.1995
(51) Int. Cl.: F02C 6/08, F02C 6/10

(54) **BRAYTON CYCLE INDUSTRIAL AIR COMPRESSOR**
GASTURBINENKOMPRESSOR DER ZAPFLUFT LIEFERT FÜR INDUSTRIELLE ZWECKE
COMPRESSEUR D'AIR INDUSTRIEL A CYCLE DE BRAYTON

(30) Priority: 19.12.1994 US 359259
(43) Date of publication of application: 08.10.1997
(73) Proprietor: NORTHERN RESEARCH & ENGINEERING CORPORATION, Woburn, MA 01801-2073 (US)
(72) Inventor: KESSELI, James, Barnett, Mont Vernon, NH 03057 (US); BALDWIN, Stephen, Peter, Winchester, MA 01890 (US)
(74) Representative: Feakins, Graham Allan
(86) International application number: PCT/US95/15759
(87) International publication number: WO 96/19653

(56) References cited:
- EP-A- 0 319 849
- FR-A- 601 964
- GB-A- 531 997
- PATENT ABSTRACTS OF JAPAN vol. 016, no. 226 (M-1254), 26 May 1992 & JP,A,04 043823 (AKASAKA TETSUKOUSHIYO:KK), 13 February 1992,
- PATENT ABSTRACTS OF JAPAN vol. 010, no. 138 (M-480), 21 May 1986 & JP,A,60 261936 (OSAKA GAS KK), 25 December 1985,
- PATENT ABSTRACTS OF JAPAN vol. 010, no. 295 (M-523), 7 October 1986 & JP,A,61 108832 (OSAKA GAS CO LTD), 27 May 1986,

## Description

This invention relates generally to air compressors and more particularly to gas turbine powered oil-free compressors.

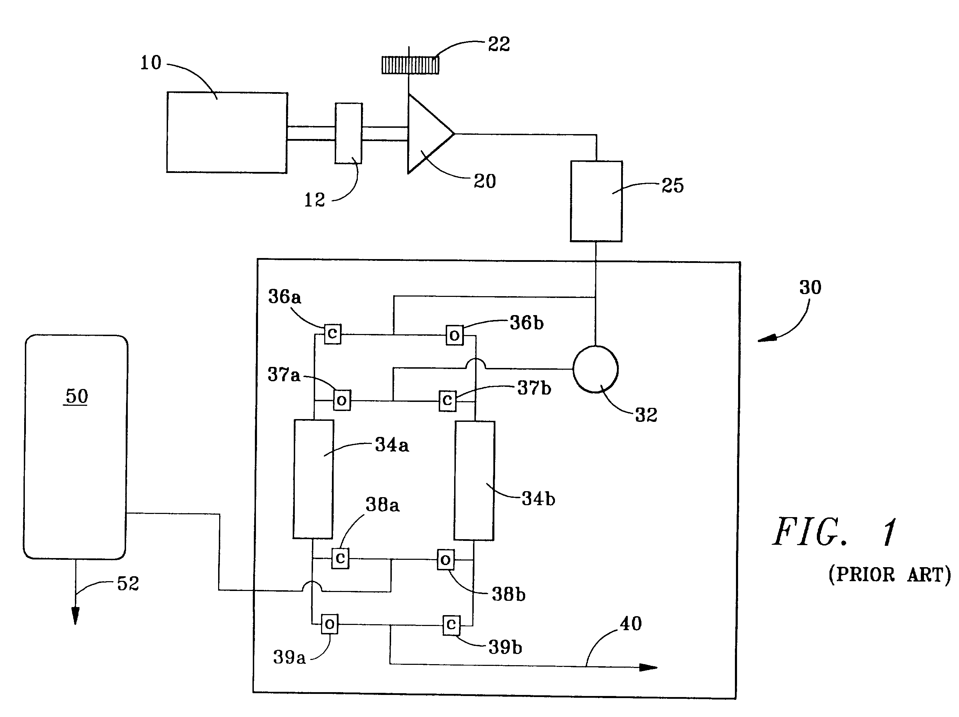

A typical industrial air compression system is shown in FIG. 1. A prime mover 10, which can be an electric motor or an internal combustion piston engine, is connected by a gear or coupling 12 to a compressor 20. The compressor 20, typically a multi-stage intercooled compressor, can be a piston compressor, screw compressor or centrifugal compressor. Inlet air 22 is provided to the compressor 20 through an inlet air filter. After being compressed, the air is normally cooled in an aftercooler 25. The cooled compressed air is then delivered to an air receiver or storage tank 50 from which the compressed air flows into an air distribution system 52. A prior art example of an air compressor having first and second turbines, first and second compressors is described in FR-A-601964.

When additional drying of the compressed air is required, the compressed air is processed through a dryer system 30. FIG. 1 shows a typical two tank desiccant dryer system. The dryer system 30 consists of two tanks 34a, 34b and associated valving, one system designated "a" and the other system designated "b" (Open valves are shown as "O" and closed valves are shown as "C"). As shown in FIG. 1, the "a" system is being regenerated and the "b" system is in service. Supply air inlet valves 36a, 36b direct the compressed air to the in-service tank 34a, 34b where a moisture absorbing desiccant absorbs moisture from the cooled compressed supply air. Supply air outlet valves 38a, 38b, direct the discharge of the in-service tank to the air receiver 50. Regeneration air inlet valves 37a, 37b direct either heated air from an auxiliary burner 32 or uncooled compressed air diverted from the compressor output prior to the aftercooler 25. In either case, the air is unsaturated and dryer than the cooled supply air. As a result of exposure to the unsaturated air, the previously absorbed moisture is released from the desiccant. The regeneration air including the removed moisture is directed by regeneration air outlet valves 39a, 39b to a regeneration dump air line 40. This regeneration air is either released to a sump or to a vent.

The dumping of the regeneration air leads to a loss of the energy of compression in the compressed air and to the loss of the energy added by the auxiliary burner 32 (if used). The dumping of the regeneration air can cause a large pressure drop across the desiccant bed 34a, 34b being regenerated. Frequently, the pressure drop from the inlet to the outlet of the desiccant bed 34a, 34b is large enough to damage the desiccant bed.

According to the present invention there is provided an apparatus of the type having a combustion chamber, a supply of fuel provided to the combustion chamber, a first turbine driven by exhaust gases leaving the combustion chamber and a second turbine driven by exhaust gases leaving the first turbine; a first compressor driven by the second turbine for compressing inlet air; and a second compressor driven by the first turbine for compressing the compressed air from the first compressor, the compressed air from the second compressor being divided into two portions, the first portion being provided to the combustion chamber, this first portion defining a combustion air portion, the second portion being extracted to form a supply of compressed air, this second portion defining a supply air portion; characterised by a means for cooling the supply air portion; and a dryer system for removing moisture from the supply air portion, the dryer system including a moisture absorption substance capable of being regenerated by the application of air having a temperature higher than the temperature of the cooled supply air portion, a further portion of the combustion air portion being applied to the moisture absorption substance for regenerating the moisture absorption substance, this portion of the combustion air portion defining a regeneration air portion.

For a better understanding of the invention and to show how the same may be carried into effect, reference will now be made, by way of example, to the accompanying drawings, in which:-
FIG. 1 is a schematic diagram of a known industrial air compression system;
FIG. 2 is a schematic diagram of one embodiment of a Brayton cycle industrial air compression system; and
FIG. 3 is a schematic diagram of an alternative embodiment of a Brayton cycle industrial air compression system.

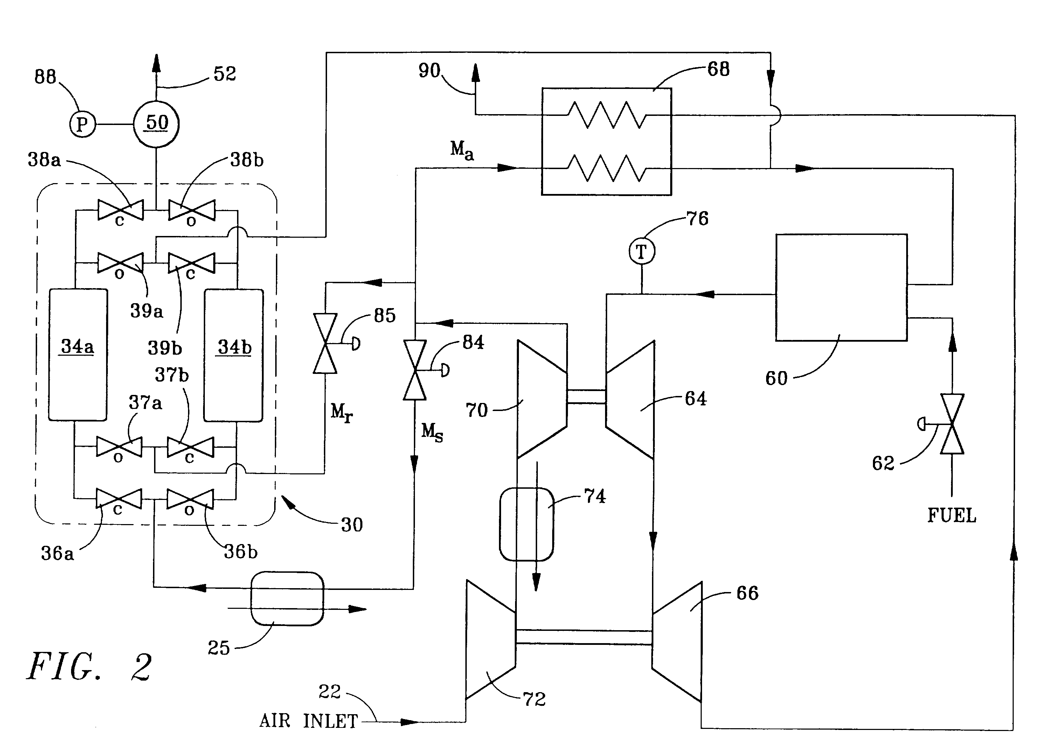

FIG. 2 shows one embodiment of a Brayton cycle industrial air compressor system having a compressor section (70 and 72) (with multiple stages) that supplies air to both the gas turbine engine (60, 64 and 66) and the air receiver 50. Each compressor stage 70, 72 is driven by a dedicated turbine 64, 66 respectively. Depending on the desired discharge pressure, one, two, three or more stages of compression may be used. A fraction of the air compressed in the multi-stage compressor (70 and 72) is delivered to an air receiver 50 and air distribution system 52, usually through a dryer system 30, while the remainder of the air proceeds through the Brayton cycle components, combustion chamber 60, optional recuperator 68 and turbines 64, 66. This dual use of the compressors (for both supply air and combustion air) eliminates the usual mechanical connections between the engine drive and the need for a separate conventional air compressor package. In thermodynamic terms, the work by-product of the Brayton cycle is extracted as excess air compression, rather than shaft power.

One major use for this Brayton cycle air compression system is to produce oil-free compressed air by using turbine driven oil-free centrifugal air compressors.

The use of a portion of the engine's air supply to dry (or regenerate) the desiccant serving the supply air (indicated as Mₛ) is an additional efficiency and cost improvement over the conventional approach that expends a portion of compressor output for this duty. In the present invention, this drying air circuit does not result in an air loss (dump) and is a significant simplification over regenerative dryer systems that incorporate an auxiliary burner. In the present invention, the drying air and the moisture it receives are returned to the engine cycle for expansion through the driving turbines. The excess moisture is beneficial to the cycle. This return of the drying air and the acquired moisture also eliminates the common environmental problem of condensate disposal.

Typically, an industrial air compression system contains numerous condensate traps to remove condensation from the piping of the system. The condensate from these traps can also be added to the combustion air Mₐ where it is returned to the engine cycle. This eliminates a further environmental problem of condensate disposal.

The embodiment shown in FIG. 2 also eliminates the two common means of regulating part-load operation. These are controllable inlet guide vanes and variable speed motor controllers. The embodiment shown in FIG. 2 can be controlled to provide constant pressure delivery over a wide flow range. Additionally, the machine can be easily adjusted to change the constant pressure set point to a different pressure with much greater range than conventional air compressors. Also, unlike a conventional constant speed, guide vane controlled compressor, the embodiment shown in FIG. 2 will operate more efficiently with lower pressure set points.

Fuel is supplied to an air heating system such as an external combustion chamber with a heat exchanger (not shown) or an internal combustion chamber 60 through a fuel throttle valve 62. In the preferred embodiment, the fuel is mixed with preheated compressed combustion air in the combustion chamber 60. The preferred combustion chamber is described in U.S. Patent No. 5,450,724. The exhaust gases from the combustion chamber 60 are directed to a first stage turbine 64. A temperature sensor 76 measures the gas inlet temperature to turbine 64. The fuel supply is throttled as needed to maintain the inlet temperature between predetermined minimum and maximum limits. The exhaust from the first stage turbine 64 then enters a second stage turbine 66. As an option, a recuperator 68 can be added to the Brayton Cycle engine to improve the fuel efficiency. In this case, the exhaust from the second stage turbine 66 passes through the recuperator 68 where the exhaust gases preheat the combustion air Mₐ prior to being exhausted from the system through vent 90.

Inlet air 22 is supplied to a first stage compressor 72, through an inlet air filter (not shown). The first stage compressor 72 is driven by the second stage turbine 66. The compressed air from the first stage compressor 72 is cooled in an optional intercooler 74 prior to entering a second stage compressor 70, which is driven by the first stage turbine 64.

Although the system shown in FIG. 2 is a two-stage system with two turbines and two compressors, the system can have a single stage or a three or more stages. In a single stage system, one compressor is driven by one turbine. In a three-stage system, a first stage compressor will be driven by a third stage turbine; a second stage compressor will be driven by a second stage turbine; and a third stage compressor will be driven by a first stage turbine. The discharge from the first stage turbine is directed to the second stage turbine and the discharge of the second turbine is directed to the third stage turbine. The discharge of the first stage compressor enters the second stage compressor and the discharge of the second stage compressor enters the third stage compressor. Air compression systems having more than three stages will be similarly configured.

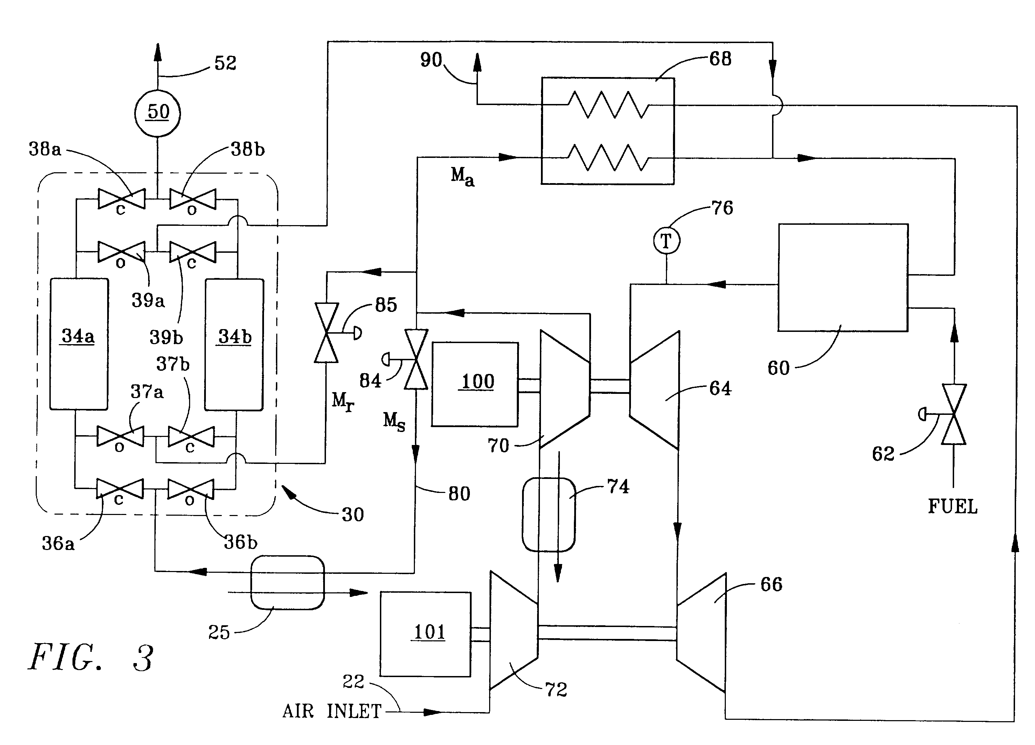

The discharge of the final (second stage in FIGS. 2 and 3) compressor 70 is divided into three portions, a supply air portion Mₛ, a combustion air portion Mₐ, and a regeneration air portion Mᵣ. The supply air Mₛ after passing through air throttle valve 84 is cooled in an aftercooler 25 and then enters a receiver 50, typically through a drying system 30. The smaller fraction Mᵣ, regeneration air, flows through the drying system 30 to regenerate the desiccant in the drying system 30. The combustion air Mₐ enters the recuperator 68 where it is preheated prior to entering the combustion chamber 60. The regeneration air Mᵣ is returned to the Brayton Cycle engine at the combustion chamber 60. At typical operating conditions, the ratios of Mₐ:Mₛ:Mᵣ are 64:34:2. However, as air demand varies, these ratios can vary.

A pressure switch 88 is set to the desired high and low pressure set points at or near receiver 50. The fuel supply to the combustion chamber 60 is regulated by the fuel actuator valve 62 in response to the pressure switch 88. The temperature sensor 76 can override control from the pressure sensor 88 to maintain the turbine 64 inlet temperature within acceptable limits.

FIG. 2 shows an optional dryer system 30. This system operates the same as the prior art dryer system described above with one major difference. The compressed air from compressor 70 is split into three portions, regeneration air Mᵣ, combustion air Mₛ and supply air Mₛ. The heated (heat of compression) regeneration air Mᵣ passes through the desiccant picking up moisture from the desiccant. The regeneration air Mᵣ, including the additional moisture, then mixes with the combustion air Mₐ after the combustion air Mₐ passes through the recuperator 68. The additional moisture is beneficial to the Brayton cycle combustion chamber-turbine combination. Among the various benefits are reduced emissions, such as NOₓ. If necessary, for optimum performance, the regeneration air Mᵣ can enter the combustion chamber 60 separately, for example, into a pre-chamber. In some instances, throttle valve 85 is provided so that the pressure drop across throttle valve 85 and the desiccant bed 34a, 34b matches the pressure drop across the recuperator 68. This allows the regeneration air Mᵣ to mix with the balance of the combustion air Mₐ. This prevents the addition of pressure losses to the Brayton Cycle which would adversely impact the fuel efficiency. For a typical system, the regeneration flow Mᵣ is 15% of the supply air Mₛ.

One embodiment of the present invention utilizes conventional fixed geometry turbine and compressors (1, 2 or 3-stage). To regulate flow at the prescribed constant pressure set-point, a fuel valve 62 and air throttle valve 84, are actuated. The air throttle valve is a variable area valve 84, like a butter-fly valve, that regulates air flow to the receiver 50. Closing this valve 84 reproportions the flow through the turbine section of the engine. The fuel throttle 62 would respond to changes in the high spool compressor discharge pressure (64 in FIG. 2). This simple method allows system flow turn-down ratio of between 2 and 4 before engine on/off cycling would be required. This represents a much larger range than would be possible with a conventional compressor system as shown in FIG. 1.

A second embodiment of the present invention described above can provide improved fuel efficiency at the part-load flow conditions. To maximize part load efficiency, for the 2:1 turn-down range, a variable nozzle feature can be added to the turbine sections. This added degree of control freedom will permit high turbine inlet temperatures to be maintained over a wider flow range and thereby improve fuel efficiency. For an even wider range of high efficiency, up to a 4:1 turn-down range, a variable diffuser section can be added to the compressor sections. This additional feature would work in conjunction with the variable nozzle turbines and fuel throttle.

An alternate embodiment of a Brayton cycle air compressor system is shown in FIG. 3. An electrical generator 100, 101, such as a generator or an alternator can be connected to one or both turbines 70, 72.

With one or more generators 100, 101 connected to the turbines 70, 72, system efficiency will remain high throughout wide variations in the supply air delivered. When the air receiver 50 and the air distribution system 52 pressure increases to the set point of the pressure control valve 84, the valve will begin to throttle closed. As the back pressure on the compressors 70, 72 increases, the electrical generators 100, 101 will begin to pick up load. The system shown in FIG. 3 automatically shares load, i.e., the work by-product of the Brayton cycle system, between the compressors 70, 72 and the electrical generators 100, 101. The temperature sensor 76 remains in the system to maintain the turbine inlet temperature within acceptable limits.

## Claims

1. An apparatus of the type having a combustion chamber (60), a supply of fuel provided to the combustion chamber (60), a first turbine (64) driven by exhaust gases leaving the combustion chamber (60) and a second turbine (66) driven by exhaust gases leaving the first turbine (64); a first compressor (72) driven by the second turbine (66) for compressing inlet air (22); and a second compressor (70) driven by the first turbine (64) for compressing the compressed air from the first compressor (72), the compressed air from the second compressor (70) being divided into two portions, the first portion being provided to the combustion chamber, this first portion defining a combustion air portion, the second portion being extracted to form a supply of compressed air, this second portion defining a supply air portion;
characterised by a means (22) for cooling the supply air portion; and a dryer system (30) for removing moisture from the supply air portion, the dryer system including a moisture absorption substance capable of being regenerated by the application of air having a temperature higher than the temperature of the cooled supply air portion, a further portion of the combustion air portion being applied to the moisture absorption substance for regenerating the moisture absorption substance, this portion of the combustion air portion defining a regeneration air portion.

2. The apparatus according to claim 1, wherein the regeneration air portion, including any moisture removed from the moisture absorption substance, is returned to the combustion air portion.

## Patentansprüche

1. Vorrichtung der Art, die einen Verbrennungsraum (60) hat, eine Versorgung mit Kraftstoff, der dem Verbrennungsraum (60) zugeführt wird, eine erste Turbine (64), die von Abgasen angetrieben wird, die den Verbrennungsraum (60) verlassen, sowie eine zweite Turbine (66), die von Abgasen angetrieben wird, die die erste Turbine (64) verlassen; einen ersten Kompressor (72), der von der zweiten Turbine (66) angetrieben wird, um Einlaßluft (22) zu komprimieren; sowie einen zweiten Kompressor (70), der von der ersten Turbine (64) angetrieben wird, um die Druckluft aus dem ersten Kompressor (72) zu komprimieren, wobei die Druckluft aus dem zweiten Kompressor (70) in zwei Teile aufgeteilt wird, wobei der erste Teil dem Verbrennungsraum zugeführt wird, wobei dieser erste Teil einen Verbrennungsluftteil definiert, und wobei der zweite Teil abgezogen wird, um eine Versorgung mit Druckluft zu bilden, wobei dieser zweite Teil einen Versorgungsluftteil definiert; **gekennzeichnet durch** eine Vorrichtung (22) zum Kühlen des Versorgungsluftteils; sowie durch ein Trocknersystem (30) zum Entfernen von Feuchtigkeit aus dem Versorgungsluftteil, wobei das Trocknersystem eine feuchtigkeitsabsorbierende Substanz aufweist, die in der Lage ist, durch die Aufbringung von Luft regeneriert zu werden, die eine Temperatur hat, die höher ist, als die Temperatur des gekühlten Versorgungsluftteils, wobei ein weiterer Teil des Verbrennungsluftteils auf die feuchtigkeitsabsorbierende Substanz aufgebracht wird, um die feuchtigkeitsabsorbierende Substanz zu regenerieren, wobei dieser Teil des Verbrennungsluftteils einen Regenerationsluftteil definiert.

2. Vorrichtung nach Anspruch 1, wobei der Regenerationsluftteil einschließlich einer Feuchtigkeit, die aus der feuchtigkeitsabsorbierenden Substanz entfernt wurde, zu dem Verbrennungsluftteil zurückgeführt wird.

## Revendications

1. Appareil du type ayant une chambre de combustion (60), une alimentation en carburant pour la chambre de combustion (60), une première turbine (64) entraînée par des gaz d'échappement sortant de la chambre de combustion (60) et une deuxième turbine (66) entraînée par des gaz d'échappement sortant de la première turbine (64); un premier compresseur (72) entraîné par la deuxième turbine (66) afin de comprimer l'air d'admission (22); et un deuxième compresseur (70) entraîné par la première turbine (64) afin de comprimer l'air comprimé par le premier compresseur (72), l'air comprimé du deuxième compresseur (70) étant divisé en deux parties, la première partie étant délivrée à la chambre de combustion, cette première partie définissant une partie d'air de combustion, la deuxième partie étant extraite pour former une alimentation en air comprimé, cette deuxième partie définissant une partie d'air d'alimentation; caractérisé par des moyens (22) destinés à refroidir la partie d'air d'alimentation; et un système de séchage (30) destiné à enlever l'humidité de la partie d'air d'alimentation, le système de séchage comprenant une substance d'absorption d'humidité qui peut être régénérée par l'application d'air ayant une température plus élevée que la température de la partie d'air d'alimentation refroidie, une autre partie de la partie d'air de combustion étant appliquée sur la substance d'absorption d'humidité pour régénérer la substance d'absorption d'humidité, cette partie de la partie d'air de combustion définissant une partie d'air de régénération.

2. Appareil selon la revendication 1, dans lequel la partie d'air de régénération, incluant toute humidité enlevée de la substance d'absorption d'humidité, est renvoyée vers la partie d'air de combustion.
